# EUROPEAN PATENT APPLICATION

(11) **EP 4 667 394 A1**
(43) Date of publication of application: **24.12.2025**
(21) Application number: 24903917.3
(22) Date of filing: 08.10.2024
(51) Int. Cl.: B65G 45/22, B65G 45/26, B08B 5/02, B65G 47/92, H01M 10/04

(54) **FOREIGN SUBSTANCE REMOVAL DEVICE OF BATTERY GRIPPER**

(30) Priority: 13.12.2023 KR 20230180238
(71) Applicant: LG Energy Solution, Ltd., Seoul 07335 (KR)
(72) Inventor: LEE, Junyeob, Daejeon 34122 (KR)
(74) Representative: Goddar, Heinz J.
(86) International application number: PCT/KR2024/015264
(87) International publication number: WO 2025/127350

(57) **Abstract**

Disclosed is a foreign matter removal apparatus according to embodiments of the present invention, for removing foreign matter of a battery gripper which transports a battery using a plurality of magnetic units, which includes a body part disposed under the battery gripper and connected to an air supply device and an air suction device.

Here, the body part may include a plurality of inlet grooves formed with a space into which a portion of each of the magnetic units is introduced; an air spray unit that sprays air supplied from the air supply device to the magnetic units; and an air discharge path that sucks in the air and foreign matter flying from the magnetic units and discharges the air and the foreign matter to the air suction device.

## Description

### [Technical Field]

This application claims priority to and the benefit of Korean Patent Application No.10-2023-0180238 filed in the Korean Intellectual Property Office on December 13, 2023, the entire contents of which are incorporated herein by reference.

The present invention relates to an apparatus for removing foreign matter of a battery gripper, and more particularly, to an apparatus for removing foreign matter of a battery gripper which transports a battery using magnetic units.

### [Background Art]

Secondary batteries, capable of recharging and reuse, may be used as an energy source for small devices such as mobile phones, tablet PCs and vacuum cleaners, and also used as an energy source for medium and large devices such as automobiles and an energy storage system (ESS) for smart grids.

Secondary batteries may be applied to a system in a form of an assembly such as a battery module in which a plurality of battery cells is connected in series and parallel or a battery rack in which battery modules are connected in series and parallel according to system requirements. For medium and large-sized devices, a high-capacity battery system with multiple battery modules connected in parallel may be applied to satisfy required capacity of the device.

Secondary batteries may be classified into can-type batteries in which an electrode assembly is built into a cylindrical metal can and pouch-type batteries in which the electrode assembly is built into a pouch-type case. In general, cylindrical can-type batteries are known to have relatively large capacities and high structural stability.

A cylindrical battery cell is manufactured by accommodating an electrode assembly having a wound structure in a cylindrical can, injecting electrolyte into the can, and joining the cap assembly having electrode terminals formed therein to an open top of the can. A positive terminal in a protruding shape may be formed in an upper central area of the cap assembly and a negative terminal may be formed in another part of the metal can. The cylindrical battery cell may be sealed through a crimping process after the cap assembly is joined to the open top of the can.

In the process of manufacturing battery cells, a transfer device that transfers a plurality of battery cells at once may be utilized to shorten process time. Such a transfer device may be utilized to proceed with another process step when a specific process step is completed.

In general, a magnetic cell gripper is used to transport battery cells by fixing the battery cells using magnetic units and then transporting them. In the case of such a battery gripper, metal foreign matter may be adsorbed to the magnetic units due to magnetic force.

Here, the metal foreign matter adsorbed to the magnetic units may cause damage to the battery cells or a fixed position of a battery cell may be misaligned due to the metal foreign matter, resulting in a defective battery.

Therefore, in order to solve this problem, an appropriate foreign matter removal technology is needed to remove foreign matters from a battery gripper that transports batteries using magnetic units.

### [Detailed Description of the Invention]

### [Technical Problem]

To obviate one or more problems of the related art, embodiments of the present disclosure provide an apparatus for removing foreign matter of a battery gripper which transports a battery using magnetic units.

### [Technical Solution]

In order to achieve the objective of the present disclosure, a foreign matter removal apparatus is an apparatus for removing foreign matter of a battery gripper which transports a battery using a plurality of magnetic units, wherein the foreign matter removal apparatus includes a body part disposed under the battery gripper and connected to an air supply device and an air suction device.

Here, the body part may include a plurality of inlet grooves formed with a space into which a portion of each of the magnetic units is introduced; an air spray unit that sprays air supplied from the air supply device to the magnetic units; and an air discharge path that sucks in the air and foreign matter flying from the magnetic units and discharges the air and the foreign matter to the air suction device.

The inlet groove may have a diameter larger than the diameter of the magnetic unit.

The air spray unit may be provided in each of the inlet grooves.

Here, the air spray unit may spray air toward an end of the magnetic unit when the end of the magnetic unit is inserted into the inlet groove.

The air spray unit may be arranged under each inlet groove. Here, the air spray unit may spray air upward when an end of the magnetic unit is inserted into the inlet groove.

The air spray units which are provided in each of the inlet grooves may individually receive air through different air supply pipes from the air supply device.

Each of the inlet grooves may have at least one air intake hole formed in an inner wall of the inlet groove. Here, the air discharge path may be connected to the air intake holes of each of the inlet grooves.

The air discharge path may discharge air sucked in from the air intake hole to the air suction device through at least one air discharge port formed in a certain area of the body part.

The air discharge path may include a flat portion communicating with the air intake holes of each of the inlet grooves and formed in a direction in which the air intake holes are arranged; and an inclined portion, which is formed by extending from the flat portion, gradually inclining toward the air discharge port and communicating with the air discharge port.

The air discharge port may be provided at each of the both ends of the body part.

The body part may be formed by laminating and combining an upper plate and a lower plate. Here, the plurality of inlet grooves may be formed in the upper plate, and the air spray unit is provided in the lower plate and is arranged under each inlet groove.

The foreign matter removal apparatus may further include an elevating unit that supports the body part and elevates the body part toward the battery gripper.

### [Advantageous Effects]

According to embodiments of the present disclosure, foreign matter adsorbed on each of magnetic units of a battery gripper can be effectively removed.

### [Brief Description of the Drawings]

FIG. 1 is a block diagram of a foreign matter removal system according to embodiments of the present invention.
FIG. 2 is a front view of a foreign matter removal apparatus according to embodiments of the present invention.
FIG. 3 is a front view of a foreign matter removal apparatus in an operation mode according to embodiments of the present invention.
FIG. 4 is a plan view of an upper plate of a body part according to embodiments of the present invention.
FIG. 5 is a plan view of a lower plate of a body part according to embodiments of the present invention.
FIG. 6 is a perspective view showing the bottom surface of the lower plate of the body part according to embodiments of the present invention.
FIG. 7 is a front view of area A in FIG. 6.
FIG. 8 is a perspective view of a body part in which an upper plate and a lower plate are combined according to embodiments of the present invention.
FIG. 9 shows air flow in the foreign matter removal apparatus according to embodiments of the present invention.

100: battery gripper
200: foreign matter removal apparatus
300: air supply device
400: air intake device

### [Best Modes for Practicing the Disclosure]

The present invention may be modified in various forms and have various embodiments, and specific embodiments thereof are shown by way of example in the drawings and will be described in detail below. It should be understood, however, that there is no intent to limit the present invention to the specific embodiments, but on the contrary, the present invention is to cover all modifications, equivalents, and alternatives falling within the spirit and technical scope of the present invention. Like reference numerals refer to like elements throughout the description of the figures.

It will be understood that, although the terms such as first, second, A, B, and the like may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes combinations of a plurality of associated listed items or any of the plurality of associated listed items.

It will be understood that when an element is referred to as being "coupled" or "connected" to another element, it may be directly coupled or connected to the other element or an intervening element may be present. In contrast, when an element is referred to as being "directly coupled" or "directly connected" to another element, there is no intervening element present.

The terms used herein is for the purpose of describing specific embodiments only and are not intended to limit the present invention. As used herein, the singular forms "a", "an" and "the" are intended to include the plural forms as well, unless the context clearly indicates otherwise. It will be further understood that the terms "comprises", "comprising", "includes", "including" and/or "having", when used herein, specify the presence of stated features, integers, steps, operations, constitutional elements, components and/or combinations thereof, but do not preclude the presence or addition of one or more other features, integers, steps, operations, constitutional elements, components, and/or combinations thereof.

Unless otherwise defined, all terms used herein, including technical and scientific terms, have the same meanings as commonly understood by one skilled in the art to which the present invention belongs. It will be further understood that terms, such as those defined in commonly used dictionaries, should be interpreted as having meanings that are consistent with their meanings in the context of the relevant art and will not be interpreted in an idealized or overly formal sense unless expressly so defined herein.

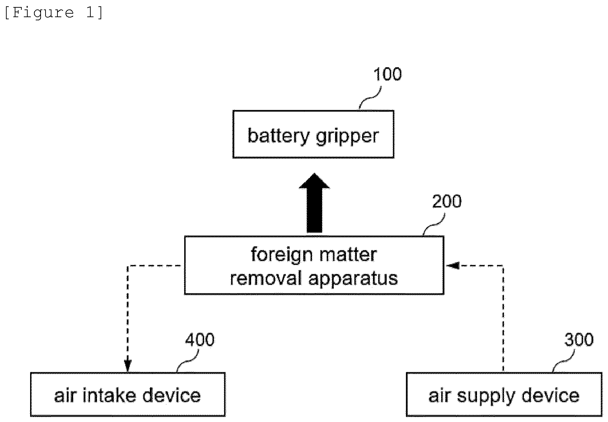

FIG. 1 is a block diagram of a foreign matter removal system according to embodiments of the present invention.

The foreign matter removal system according to embodiments of the present invention is a system for removing foreign matters adsorbed on a certian area of a battery gripper 100, and may include a foreign matter removal apparatus 200, an air supply device 300, and an air intake device 400, as shown in FIG. 1.

The battery gripper 100 is a device that may include a plurality of magnetic units, fix batteries and transport them to a specific location using magnetic force of each magnetic unit. Here, the magnetic unit may include at least one of a permanent magnet and an electric magnet.

The foreign matter removal apparatus 200 may be placed under the battery gripper 100 and may communicate with the air supply device 300 and the air intake device 400. Here, the foreign matter removal apparatus 200 may spray air supplied from the air supply device 300 onto the magnetic units of the battery gripper 100 using one or more air spray units. In addition, the foreign matter removal apparatus 200 may suck in the injected air and foreign matter flying from the magnetic units due to the injected air and discharge the air and foreign matter to the air suction device 400 through an air discharge path formed inside.

The air supply device 300 is a device that may suck in external air and supplies the sucked air to the foreign matter removal apparatus 200. Here, the air supply device 300 may suck in external air using an air pump and supply air to the air spray unit of the foreign matter removal apparatus 200 using one or more air supply pipes.

The air suction device 400 is a device that may suck in the air and foreign matter discharged from the foreign matter removal apparatus 200. Here, the air suction device 400 may suck in air and foreign matters discharged from the foreign matter removal apparatus 200 using an air pump and one or more air discharge pipes.

A foreign matter removal method performed by the foreign matter removal system may proceed as follows.

The battery gripper 100 may be transferred to an upper part above the foreign matter removal apparatus 200 by a transfer device. Afterwards, the battery gripper 100 may be lowered or the foreign matter removal apparatus 200 may be raised by a lifting device, so that the relative gap between the battery gripper 100 and the foreign matter removal apparatus 200 may be gradually narrowed. Then, when the magnetic units of the battery gripper 100 and the air spray unit of the foreign matter removal apparatus 200 reach a predetermined gap, the lowering of the battery gripper 100 or the raising of the foreign matter removal apparatus 200 may be stopped. Here, the foreign matter removal apparatus 200 may spray air to a specific area of the magnetic units using an air spray unit, suck in the sprayed air and the flying foreign matter, and discharge the sprayed air and the flying foreign matter to the air suction device 400 through the air discharge path. Thereafter, the battery gripper 100 may be raised or the foreign matter removal apparatus 200 may be lowered by the lifting device, so that the process of foreign matter removal for the corresponding battery gripper 100 may be completed.

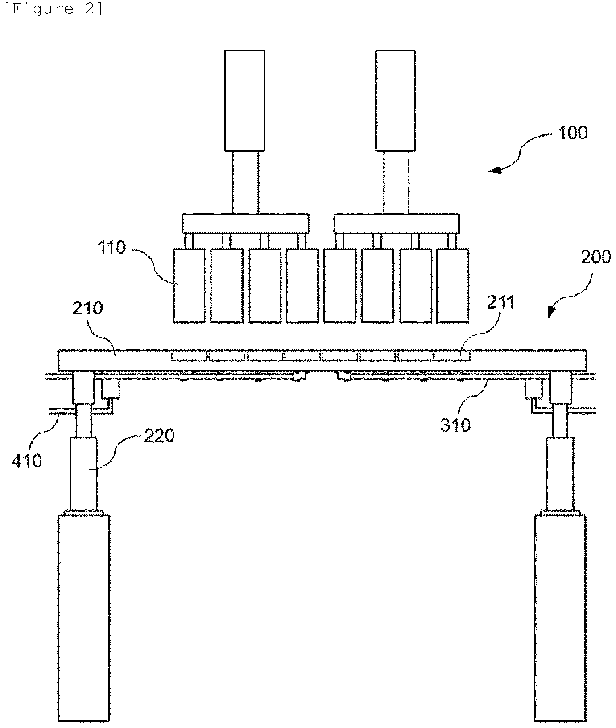

FIG. 2 is a front view of a foreign matter removal apparatus according to embodiments of the present invention.

The foreign matter removal apparatus 200 may be disposed below the battery gripper 100 and may include a body part 210 and an elevating unit 220.

The battery gripper 100 may include a plurality of magnetic units 110. Here, a magnetic member including at least one of a permanent magnet and an electric magnet may be disposed at the lower end of each magnetic unit 110.

In the present invention, the shape of the magnetic unit 110 is not limited to a specific shape. However, for a clear explanation of embodiments of the present invention, a cylindrical magnetic unit 110 is described as an example.

The elevating unit 220 may be a device that supports and elevates the body part 210. Here, the elevating unit 220 may raise the body part 210 to a predetermined position toward the battery gripper 100 when the foreign matter removal apparatus 200 is switched to an operation mode and may lower the body part 210 to the original position when a foreign matter removal process is completed. The elevating unit 220 may include an actuator for raising the body part 210.

The body part 210 may include a plurality of inlet grooves 211 in which a space is formed into which a portion of each of the magnetic units 110 may be introduced. Here, each of the inlet grooves 211 may be formed on the upper surface of the body part 210 and may be formed at a position corresponding to the position of the magnetic unit 110.

The inlet grooves 211 may be formed with a diameter larger than the diameter of the magnetic unit 110. In other words, each of the inlet grooves 211 may be formed with a diameter larger than the cross-sectional diameter of the circular magnetic unit 110 so that an end of the magnetic unit 110 may be introduced.

The body part 210 may include one or more air spray units that spray air supplied from the air supply device 300 to the magnetic units 110. Here, the air spray unit may receive air through an air supply pipe 310 from the air supply device 300 and spray air to a corresponding magnetic unit 110.

The air spray unit may be provided in each of the inlet grooves 211. Here, the air spray unit may be arranged under each of the inlet grooves 211 and configured to spray air toward the upper side.

The air spray units provided in each of the inlet grooves 211 may individually receive air from the air supply device 300 through different air supply pipes 310. For example, if 16 inlet grooves 211 are formed in the body part 210, air spray units may be provided on the lower surface of each of the inlet grooves 211. Here, each of the 16 air spray units may be individually connected to 16 air supply pipes, receive air from the air supply device 300, and spray air to corresponding magnetic units 110.

An air discharge path may be formed inside the body part 210 to suck in the air injected by the air spray unit and foreign matter flying from the magnetic units 110 and discharge the injected air and the foreign matter to the air suction device 400. Here, the air and foreign matters sucked into the air discharge path may be discharged to an air intake device 400 through an air discharge pipe 410.

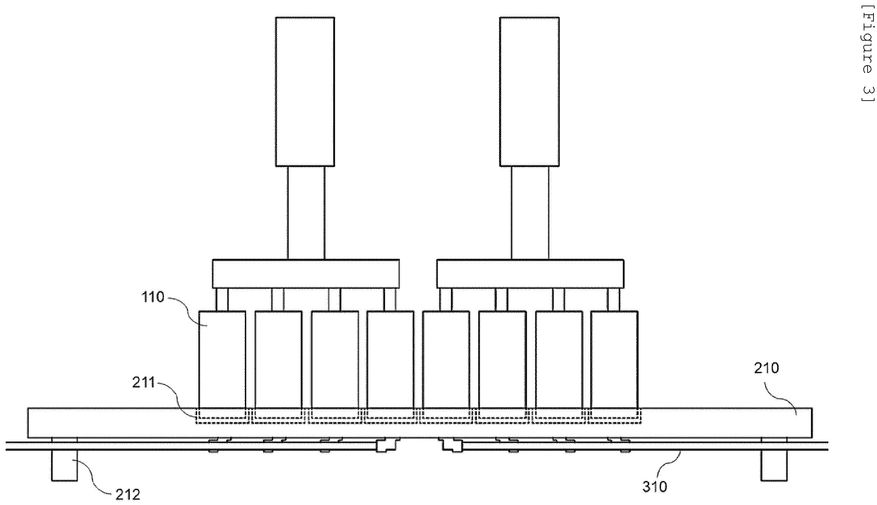

FIG. 3 is a front view of a foreign matter removal apparatus in an operation mode according to embodiments of the present invention.

When the foreign matter removal apparatus 200 is switched to an operation mode while the battery gripper 100 is positioned above the foreign matter removal apparatus 200, the elevating unit 220 may raise the body part 210 toward the battery gripper 100. Accordingly, the relative gap between the lower end of the magnetic unit 110 and the upper surface of the body part 210 may gradually narrow.

When the lower end of each magnetic unit 110 is inserted into each corresponding inlet groove 211, and thereafter, when the bottom surface of the inlet groove 211 and the lower surface of the magnetic unit 110 are positioned with a predetermined gap, the elevation of the body part 210 by the elevating unit 220 may stop.

The air spray units arranged in each of the inlet grooves 211 may receive air from the air supply device 300 through different air supply pipes 310 and spray air toward the end of the corresponding magnetic unit 110. Here, the air spray units are arranged under each of the inlet grooves 211 and may spray air upward.

The air injected by the air spray units and foreign matter flying from the magnetic units are sucked in through the air discharge path formed inside the body part 210, and the sucked air and foreign matter may be discharged to the air suction device 400 through the air discharge pipe 410.

Each of the inlet grooves 211 may have one or more air suction holes formed on the inner wall. Here, the air discharge path is connected to the air suction holes of each of the inlet grooves and may suck in air and foreign matter. The air discharge path is connected to one or more air discharge ports 212 formed in a specific area of the body part and the air discharge ports 212 are connected to the air discharge pipe 410 so that the sucked air and foreign matter may be discharged to the air intake device 400.

The air discharge ports 212 may be provided at each of the two ends of the body part 210. Here, each of the air discharge ports 212 may have its upper side closed and its lower side connected to the air discharge pipe 410.

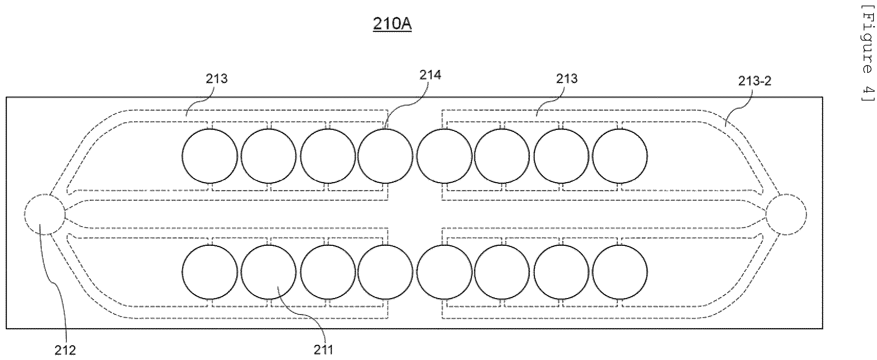

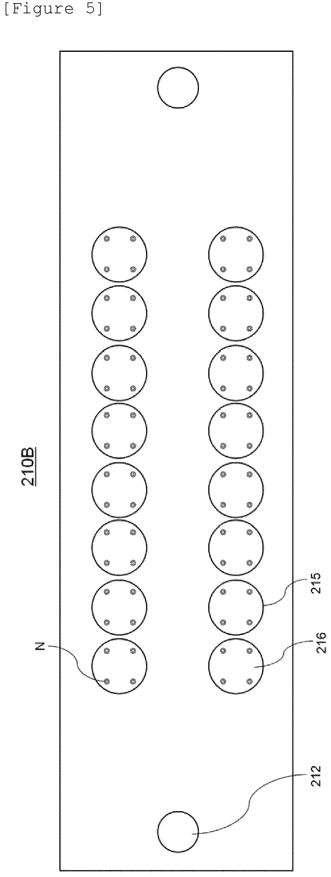

FIG. 4 is a plan view of an upper plate of a body part according to embodiments of the present invention and FIG. 5 is a plan view of a lower plate of a body part according to embodiments of the present invention.

The body part 210 according to embodiments of the present invention may be formed by laminating and combining an upper plate 210A and a lower plate 210B. Here, the upper plate 210A and the lower plate 210B may be screw-connected through a plurality of screws, or laminated and bonded through an adhesive, to form the body part 210.

Referring to FIG. 4, a plurality of inlet grooves 211 may be formed on the upper surface of the upper plate 210A. Here, each of the inlet grooves 211 may be formed at a position corresponding to the position of the magnetic units 110.

The inlet grooves 211 formed in the upper plate 210A may be formed by penetrating the upper plate 210A, and air spray units 216 (see FIG. 5) located in the lower plate 210B may be arranged under the inlet grooves 211.

An air discharge path 213 for sucking in air injected by the air spray units 216 and foreign matter flying from the magnetic units may be formed inside the upper plate 210A.

One or more air intake holes 214 may be formed on the inner wall in each of the inlet grooves 211. Here, the air discharge path 213 may communicate with the air intake holes 214 of each of the inlet grooves 211 to suck in air and foreign matter.

The air discharge path 213 may be connected to air discharge ports 212 formed at each of the two ends of the upper plate 210A and the air discharge ports 212 may be connected to an air discharge pipe 410, so that the sucked air and foreign matter may be discharged to the air intake device 400.

The air discharge path 213 may include a flat portion 213-1 formed along the direction in which the air suction holes 214 are arranged and an inclined portion 213-2 which is formed by extending from the flat portion 213-1, gradually slanting toward the air discharge port 212, and communicating with the air discharge port 212. Here, the air and foreign matter may be discharged smoothly without foreign matter accumulating due to the inclined portion 213-2 of the air discharge path 213.

Referring to FIG. 5, the lower plate 210B may be formed with a plurality of mounting grooves 215. Here, each of the mounting grooves 215 may be formed at a position corresponding to the inlet grooves 211 of the upper plate 210A.

The air spray unit 216 may be positioned in the mounting groove 215. Here, each of the air spray units 216 may be hermetically settled and fixed in a corresponding mounting groove 215.

The air spray unit 216 may include a plurality of spray nozzles N that spray air supplied through the air supply pipe 310. Here, the spray nozzles N may be arranged to be dispersed along the circumferential direction of the air spray unit 216.

The lower part of the air spray unit 216 may be hermetically connected to the air supply pipe 310 through a fastening member 320, and the air spray unit 216 may disperse air supplied from the air supply pipe 310 through the spray nozzles and spray it upward.

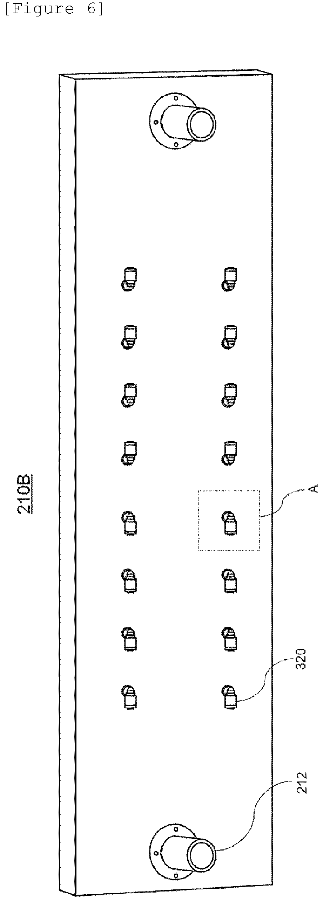

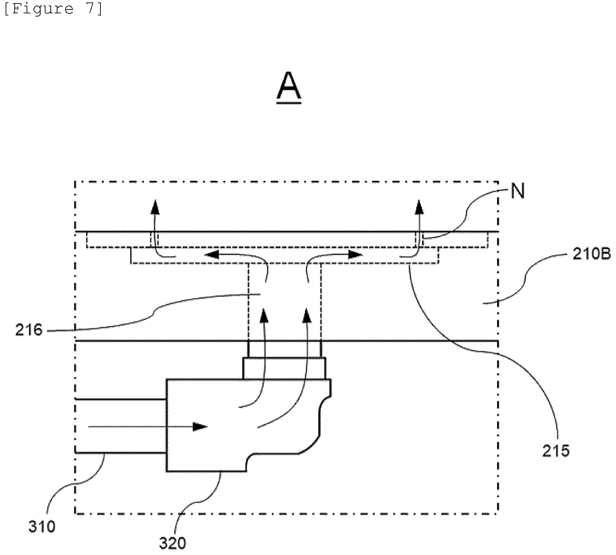

FIG. 6 is a perspective view showing the bottom surface of the lower plate of the body part according to embodiments of the present invention and FIG. 7 is a front view of area A in FIG. 6.

Referring to FIG. 6, each of air spray units 216 provided on the lower plate 210B may be connected to an air supply pipe 310 through a connecting member 320 and may individually receive air from an air supply device 300.

The air supply pipe 310 may be formed of a flexible material and arranged so as not to overlap with other air supply pipes 310.

Referring to FIG. 7, the lower plate 210B may have a mounting groove 215 formed therein. Here, the air spray unit 216 may be hermetically settled and fixed in the mounting groove 215.

The lower part of the air spray unit 216 may be hermetically connected to the air supply pipe 310 through the fastening member 320 and the air spray unit 216 may disperse the air supplied from the air supply pipe 310 through the spray nozzles N and spray it upward.

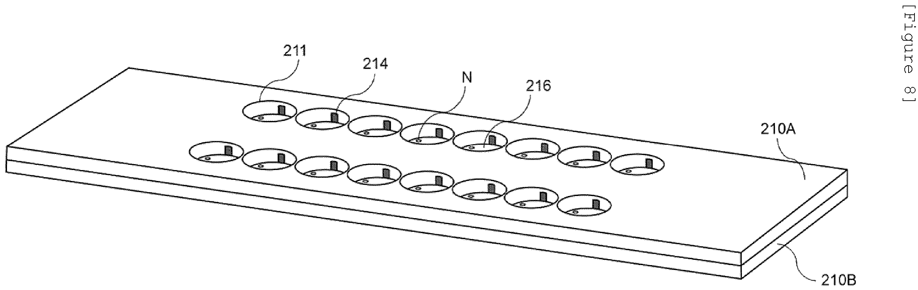

FIG. 8 is a perspective view of a body part in which an upper plate and a lower plate are combined according to embodiments of the present invention.

The body part 210 may be formed by laminating and combining an upper plate 210A and a lower plate 210B. Here, the upper plate 210A and the lower plate 210B may be screw-connected through a plurality of screws, or laminated and bonded through an adhesive to form the body part 210.

A plurality of inlet grooves 211 may be formed on the upper plate 210A and an air spray unit 216 fixed to the lower plate 210B may be arranged under each inlet groove 211.

The air spray unit 216 may include a plurality of spray nozzles N that spray air supplied through the air supply pipe 310. Here, the spray nozzles N may spray air supplied from the air supply pipe 310 toward the upper side.

An air discharge path 213 may be formed inside the upper plate 210A to suck in air injected by the air spray units 216 and foreign matters flying from the magnetic units.

In each of the inlet grooves 211, one or more air intake holes 214 may be formed on the inner wall. Here, the air discharge path 213 may be connected to the air intake holes 214 of each of the inlet grooves 211 to suck in air and foreign matters.

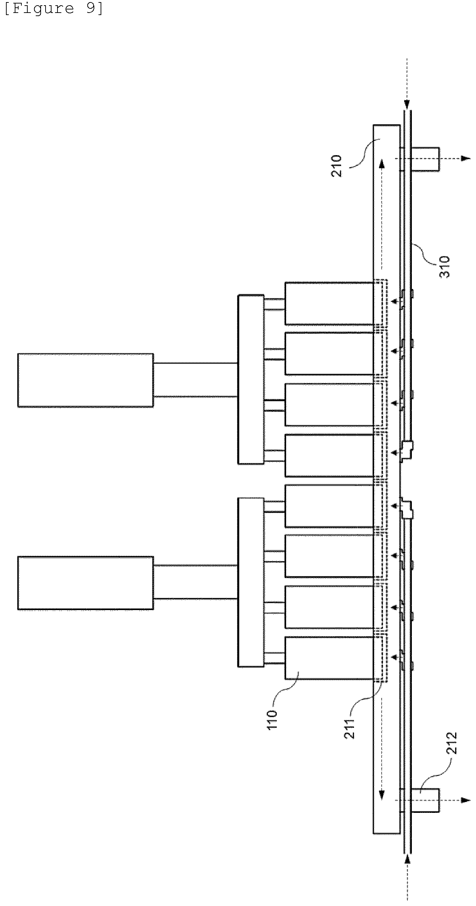

FIG. 9 shows air flow in the foreign matter removal apparatus according to embodiments of the present invention.

After the foreign matter removal apparatus 200 is switched to an operation mode, when the lower ends of the magnetic units 110 are introduced into corresponding inlet grooves 211, the air spray units 216 may receive air from the air supply device 300 through different air supply pipes 310. Here, each of the air spray units 216 may spray air toward the end of the corresponding magnetic unit 110 through a plurality of spray nozzles.

The injected air and the flying foreign matter may be sucked into the air intake holes 214 formed on the inner wall of each of the inlet grooves 211 and be guided into the air discharge path 213 formed inside the upper plate 210A. Thereafter, the air and foreign matter that has been introduced may be discharged to the air intake device 400 through the air discharge ports 212 and the air discharge pipe 410 formed at each end of the body part 210.

Here, the air and foreign matter may be prevented from being sucked into a suction hole 214 of another inlet groove 211 by the inner walls of the inlet grooves 211. In addition, the foreign matter may be discharged smoothly without being accumulated by the inclined portion 213-2 of the air discharge path 213.

Although some aspects of the invention have been described in the context of the apparatus, it may also represent a description according to a corresponding method, wherein a block or apparatus corresponds to a method step or feature of a method step. Similarly, aspects described in the context of a method may also represent a feature of a corresponding block or item or a corresponding apparatus. Some or all of the method steps may be performed by (or using) a hardware device, such as, for example, a microprocessor, a programmable computer, or an electronic circuit. In some embodiments, one or more of the most important method steps may be performed by such an apparatus.

In the forgoing, the present invention has been described with reference to the exemplary embodiment of the present invention, but those skilled in the art may appreciate that the present invention may be variously corrected and changed within the range without departing from the spirit and the area of the present invention described in the appending claims.

## Claims

1. An apparatus for removing foreign matter of a battery gripper which transports a battery using a plurality of magnetic units, the apparatus comprising:
a body part disposed under the battery gripper and connected to an air supply device and an air suction device,
wherein the body part includes:
a plurality of inlet grooves formed with a space into which a portion of each of the magnetic units is introduced;
an air spray unit that sprays air supplied from the air supply device to the magnetic units; and
an air discharge path that sucks in the air and foreign matter flying from the magnetic units and discharges the air and the foreign matter to the air suction device.

2. The apparatus of claim 1, wherein the inlet groove has a diameter larger than the diameter of the magnetic unit.

3. The apparatus of claim 1, wherein the air spray unit is provided in each of the inlet grooves.

4. The apparatus of claim 3, wherein the air spray unit sprays air toward an end of the magnetic unit when the end of the magnetic unit is inserted into the inlet groove.

5. The apparatus of claim 3, wherein the air spray unit is arranged under each inlet groove and sprays air upward when an end of the magnetic unit is inserted into the inlet groove.

6. The apparatus of claim 3, wherein the air spray units which are provided in each of the inlet grooves individually receive air through different air supply pipes from the air supply device.

7. The apparatus of claim 1, wherein each of the inlet grooves has at least one air intake hole formed in an inner wall of the inlet groove, and
wherein the air discharge path is connected to the air intake holes of each of the inlet grooves.

8. The apparatus of claim 7, wherein the air discharge path discharges air sucked in from the air intake hole to the air suction device through at least one air discharge port formed in a certain area of the body part.

9. The apparatus of claim 8, wherein the air discharge path includes:
a flat portion communicating with the air intake holes of each of the inlet grooves and formed in a direction in which the air intake holes are arranged; and
an inclined portion, which is formed by extending from the flat portion, gradually inclining toward the air discharge port and communicating with the air discharge port.

10. The apparatus of claim 8, wherein the air discharge port is provided at each of the both ends of the body part.

11. The apparatus of claim 1, wherein the body part is formed by laminating and combining an upper plate and a lower plate,
the plurality of inlet grooves is formed in the upper plate, and
the air spray unit is provided in the lower plate and is arranged under each inlet groove.

12. The apparatus of claim 1, further comprising an elevating unit that supports the body part and elevates the body part toward the battery gripper.
